# EUROPEAN PATENT APPLICATION

(11) **EP 4 513 366 A1**
(43) Date of publication of application: **26.02.2025**
(21) Application number: 23192385.5
(22) Date of filing: 21.08.2023
(51) Int. Cl.: G06F 21/55, H04L 9/40

(54) **METHOD OF THREAT DETECTION IN A THREAT DETECTION NETWORK AND THREAT DETECTION NETWORK**

(71) Applicant: WithSecure Corporation, 00180 HELSINKI (FI)
(72) Inventor: BLOMSTEDT, Paul, 00180 HELSINKI (FI); KOMASHINSKIY, Dmitriy, 00180 HELSINKI (FI); PALUMBO, Paolo, 00180 HELSINKI (FI); AKSELA, Matti, 00180 HELSINKI (FI)
(74) Representative: Berggren Oy

(57) **Abstract**

A threat detection network, a node of a threat detection network and a threat detection method in a threat detection network, the threat detection network comprising interconnected nodes (5a - 5h) and a backend system (2), wherein the backend system utilizes a backend threat detection mechanism, and at least part of the nodes (5a - 5h) comprise security agent modules (6a - 6h) which collect data related to the respective node. The nodes (5a - 5h) utilize at least one local threat detection model which comprises a machine learning-based model of a backend threat detection mechanism. The method comprises collecting data related to the node (5a - 5h) by the security agent module at the node, applying the local threat detection model to the collected data, and making a security related decision at the node (5a - 5h), such as an endpoint, based on results of the local threat detection model.

## Description

### Technical Field

The present invention relates to a threat detection method in a threat detection network, a node of a threat detection network, a backend server of a threat detection network and a threat detection network.

### Background

Security systems for computers and computer networks are used to detect threats and anomalies in computers and networks. Examples of such are Endpoint Detection & Response (EDR) and Managed Detection and Response (MDR) products and services. EDR focuses on the detection and monitoring of a breach as it occurs and helps to determine how best to respond to the detected breach. The growth of efficient and robust EDR solutions has been made possible in part by the emergence of machine learning, big data and cloud computing. MDR in turn is a managed cybersecurity service providing service for threat detection, response and remediation.

Modern EDR and MDR services rely on lightweight endpoint-side software agents or sensors that collect, preprocess and submit relevant state and behavioral data to the backend side whose data processing pipelines focus on advanced enrichment and analysis of the data for further timely attack detection and response. Increasing complexity and sophistication of advanced cyberattacks requires continuous development and maintenance of mechanisms from EDR and MDR service providers to be able to provide early detection of new and modified attack patterns. To this end, two opposite groups of approaches exist: misuse detection and anomaly detection.

Misuse detection is efficient in terms of making qualitative decisions with very low false positive rate. In backend-side setting, misuse detection brings in additional benefits by way of explicitly enforcing data driven processes in cybersecurity companies: full control over detection and response processes and tools, fast and reliable updates of attack detection routines, flexibility in exploring and experimenting with the available data. However, drawbacks of backend-side misuse detection are as follows: limitations of private data processing, increased vulnerability window caused by the unavoidable time overhead necessary for passing data through the backend-side data processing pipelines, its high precision implies low coverage in detecting previously unknown attack patterns and difficulties in creating and maintaining backend -side local contexts for endpoint-side entities like processes, applications, users.

Anomaly detection mechanisms in general, and their backend-side implementation in particular, facilitate adjacent EDR and MDR centric processes including threat intelligence and threat hunting. As for the attack detection domain, due to its proneness to false positives, it usually plays second fiddle by helping to spot novelties, outliers and abnormalities in data submitted. The main benefit it brings is the ability to highlight unexpected and strange states and behaviors of the key endpoint-entities (processes, applications, user accounts and so forth). This property comes into play when misuse detection fails to recognize new, previously unseen attacks due to the lack of knowledge or overly precise and therefore, limited condition clauses triggering detection logic.

A problem with MDR and EDR however is that the volume of data produced by the data collectors can be extremely large. Data volume is normally proportional to the activity occurring at a given MDR and EDR endpoint so when activity at that MDR and EDR endpoint is great, the produced data volume is also great. The immediate consequences of such large volumes of data include decreased quality of service, increased cost of service and increased consumption of resources associated with managing large volumes of data. For example, when high volumes of data need to be processed and made available in a useable format, the associated resource overheads and monetary costs can in some cases be very large for the MDR and/or EDR provider, which in turn can increase the cost of providing MDR or EDR to customer organizations. Many organizations thus simply opt not to implement EDR and continue to rely solely on EPP (End Point Protection) solutions, which presents a security risk as basic EPP services do not provide adequate protection against advanced file-less threats.

For these reasons there is a need for a reliable and efficient threat detection method and threat detection network.

### Summary

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

According to a first aspect, the invention relates to a method, e.g. a computer implemented method, of threat detection in a threat detection network, the threat detection network comprising interconnected nodes and a backend system, wherein the backend system utilizes a backend threat detection mechanism. At least part of the nodes, e.g. network nodes, comprise security agent modules which collect data related to the respective node. The nodes utilize at least one local threat detection model which comprises a machine learning-based model of a backend threat detection mechanism. The method comprises collecting data related to the node by the security agent module at the node, applying the local threat detection model to the collected data, and making a security related decision at the node, such as an endpoint, based on results of the local threat detection model.

In one embodiment of the invention the local threat detection model which comprises a machine learning-based model of the backend threat detection mechanism is an approximation of the backend side rule-based threat detection mechanism.

In one embodiment of the invention the local threat detection model comprises at least one misuse detection model which is based on at least one machine learning model for finding events that are likely to contribute to detections of a cyber incident.

In one embodiment of the invention the misuse detection models are trained at the backend system in supervised learning fashion for a classification problem.

In one embodiment of the invention the misuse detection model training set comprises of complementary subsets of existing events that are proven to be relevant for confirmed and existing cyber incidents and/or cyber-attacks and/or represent typical benign behaviors.

In one embodiment of the invention the local threat detection model further comprises at least one anomaly detection model which is based on at least one machine learning model for finding uncommon events that are likely to contribute to threat detection, intelligence and/or hunting purposes.

In one embodiment of the invention at least one anomaly detection model is trained in unsupervised, supervised or semi-supervised learning fashion at the backend system or at the node.

In one embodiment of the invention training of the misuse detection and/or anomaly detection model is carried out regularly and/or once the training process is over, a new model is transmitted to nodes and used locally by nodes.

In one embodiment of the invention the agent of the node uses the local threat detection model for obtaining scores for a stream of observed local events in a timely manner and/or aligns observed events over a timeline in the order of their appearance and combines their scores assigned by the local threat detection model to the timeline.

In one embodiment of the invention the anomaly detection model and/or misuse detection model are applied to events observed on each node and overlaid on a timeline graph as a set of respective time series.

In one embodiment of the invention every new event gets a score or set of scores from the anomaly detection model and/or misuse detection model.

In one embodiment of the invention the node utilizes both anomaly detection and misuse detection models at the node and uses the models together by looking at relations between score patterns between the anomaly detection model and the misuse detection model.

In one embodiment of the invention preparation of the machine learning based threat detection model comprises defining backend threat detection mechanism features, defining local threat detection model features, and training the local threat detection model based on training data and/or the backend threat detection mechanism.

According to a second aspect, the invention relates to a node, e.g. a network node, of a threat detection network, the network comprising interconnected nodes and a backend system, wherein the node comprises at least one or more processors and at least one security agent module which is configured to collect data related to the respective node. The node is further configured to utilize a local threat detection model, which comprises a machine learning-based model of a backend threat detection mechanism. The node is configured to collect data related to the node by the security agent module at the node, apply the local threat detection model to the collected data, and make a security related decision at the node, such as an endpoint, based on results of the local threat detection model.

In one embodiment of the invention the node is configured to carry out a method according to any embodiment of the invention.

According to a third aspect, the invention relates to a threat detection network comprising at least one node according to any embodiment of the invention, and at least one backend system, the backend system comprising at least one server which comprises at least one or more processors. The backend system is configured to utilize a backend threat detection mechanism and further configured to train and/or provide to nodes a local threat detection model, comprising an anomaly detection model and/or a misuse detection model.

According to a fourth aspect, the invention relates to a computer program comprising instructions which, when executed by a computer, cause the computer to carry out a method according to the invention.

According to a fifth aspect, the invention relates to a computer-readable medium comprising the computer program according to the invention.

With the solution of the invention it's possible to achieve a reliable and efficient threat detection method and threat detection network. With the solution of the invention also an optimal tradeoff between high precision of misuse detection mechanisms and high sensitivity of anomaly detection mechanisms can be achieved. The solution of the invention is also to be able to reduce the volume of data produced by the data collectors sent to backend.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated.

Furthermore, it is to be understood that the use of "a" or "an", i.e. a singular form, throughout this document does not exclude a plurality.

### Brief description of the drawings

The embodiments of the invention are illustrated by way of example, and not by way of limitation, in the figures of the accompanying drawings.
- Figure 1: presents schematically an example network architecture of one embodiment of the invention.
- Figure 2: presents an example embodiment of a solution of the present invention comprising two local computer networks and a security service network.
- Figure 3A-C: present example embodiments of different scenarios according to embodiment of the invention.

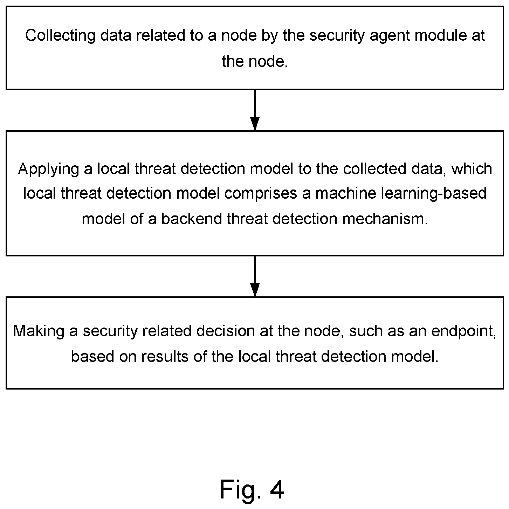

- Figure 4: presents an example method according to one embodiment of the invention.

### Detailed description

A threat detection network according to one embodiment of the invention may comprise at least one node, such as a network node, and at least one backend server. In this case information, e.g. threat detection models, can be shared between the nodes and/or between the nodes and the backend server. In one embodiment of the invention the threat detection network can comprise only a plurality of nodes and no backend server is necessary. In this case information, e.g. threat detection models, can be shared between the nodes.

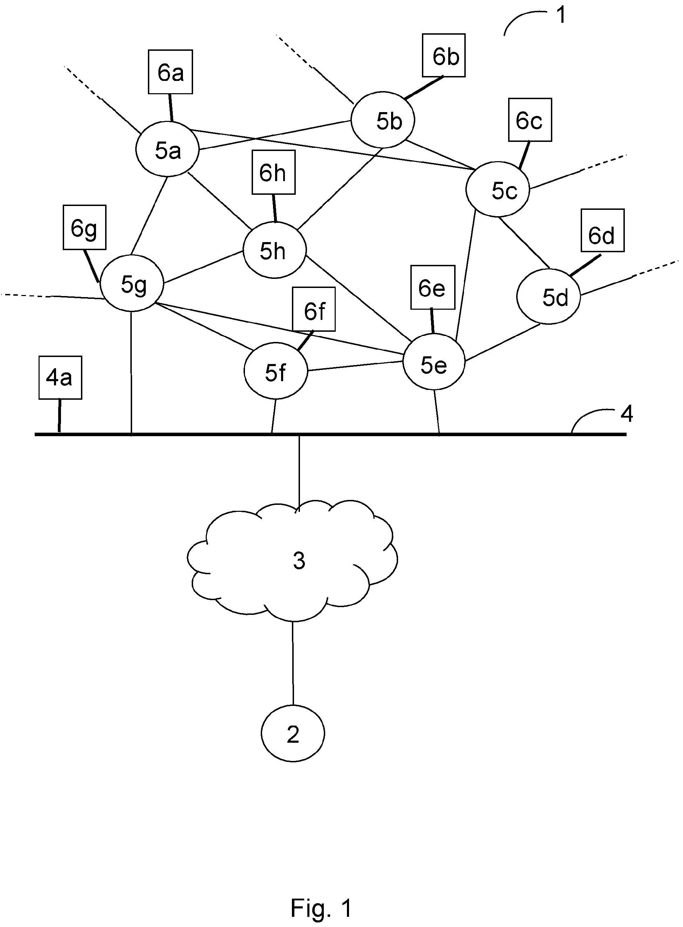

Figure 1 presents schematically an example network architecture of one embodiment of the invention in which the solution of the invention can be used. In Figure 1 a part of a first computer network 1 is schematically illustrated into which a computer system, for example an EDR system, has been installed. Also, any other computer system that is able to implement the embodiments of the invention can be used instead or in addition to the EDR system used in this example. The first computer network is connected to a security service network, here security backend/server 2 through the cloud 3. The backend/server 2 forms a node on the security service computer network relative to the first computer network. The security service computer network can be managed by an EDR system provider and may be separated from the cloud 3 by a gateway or other interface (not shown) or other network elements appropriate for the backend 2. The first computer network 1 may also be separated from the cloud 3 by a gateway 4 or other interface. Other network structures are also possible.

The first computer network 1 is formed of a plurality of interconnected nodes 5a-5h, each representing an element in the computer network 1 such as a computer, smartphone, tablet, laptop, or other piece of network enabled hardware. Each node 5a-5h shown in the computer network also represents an EDR endpoint onto which a security agent module 6a-6h, that may include a data collector or "sensor", is installed. Security agent modules may also be installed on any other element of the computer network, such as on the gateway or other interface. In the example of Figure 1 a security agent module 4a has been installed on the gateway 4. The security agent modules, 6a-6h, 4a collect various types of data at the nodes 5a-5h or gateway 4 including, for example, program or file hashes, files stored at the nodes 5a-5h, logs of network traffic, process logs, binaries or files carved from memory (e.g. DLL, EXE, or memory forensics artefacts), and/or logs from monitoring actions executed by programs or scripts running on the nodes 5a-5h or gateway 4 (e.g. tcp dumps).

The data collected may be stored in a database or similar model for information storage for further use. Any kind of threat models may further be constructed at the nodes 5a-5h by a security application, at the backend/server 2, and/or at a second server and be stored in the database. The nodes 5a-5h and the server 2 typically comprise a hard drive, a processor, and RAM.

Any type of data which can assist in detecting and monitoring a security threat, such as a security breach or intrusion into the system, may be collected by the security agent modules 6a-6h, 4a during their lifecycle and that the types of data which are observed and collected may be set according to rules defined by the EDR system provider upon installation of the EDR system and/or when distributing components of a threat detection model and/or a behavior model. In an embodiment of the present invention, at least part of the security agent modules 6a-6h may also have capabilities to make decisions on the types of data observed and collected themselves. For example, the security agents 6a-6h, 4a may collect data about the behavior of programs running on an EDR endpoint and can observe when new programs are started. Where suitable resources are available, the collected data may be stored permanently or temporarily by the security agent modules 6a-6h, 4a at their respective nodes or at a suitable storage location on the first computer network 1 (not shown).

The security agent modules 6a-6h, 4a are set up such that they send information such as the data they have collected or send and receive instructions to/from the EDR backend 2 through the cloud 3. This allows the EDR system provider to remotely manage the EDR system without having to maintain a constant human presence at the organization which administers the first computer network 1.

In one embodiment of the invention, the security agent modules 6a-6h, 4a can also be configured to establish an internal network, e.g. an internal swarm intelligence network, that comprises the security agent modules of the plurality of interconnected nodes 5a-5h of the local computer network 1. As the security agent modules 6a-6h, 4a collect data related to the respective nodes 5a-5h of each security agent module 6a-6h, 4a, they are further configured to share information that is based on the collected data in the established internal network. In one embodiment a swarm intelligence network is comprised of multiple semi-independent security nodes (security agent modules) which are capable of functioning on their own as well. Thus, the numbers of instances in a swarm intelligence network may well vary. There may also be more than one connected swarm intelligence networks in one local computer network, which collaborate with one another.

The security agent modules 6a-6h, 4a are further configured to use the collected data and information received from the internal network for generating and adapting models related to the respective node 5a-5h and/or its users. Models can be for example user behavior models, threat detection models, etc.

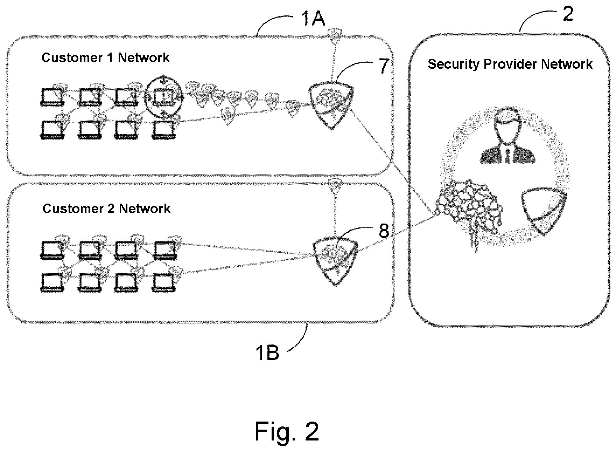

Figure 2 illustrates a high-level concept of one embodiment of the invention. The example of Figure 2 presents two local computer networks 1A, 1B, and a security service network 2, wherein each local computer network 1A, 1B further comprises a local center node 7, 8 and a plurality of interconnected nodes and a security agent module in each of the plurality of nodes. The security agent modules can be configured to establish an internal swarm intelligence network in each local computer network. The behavior models created in the solution of the invention can be shared between the computer networks, local center nodes, nodes and the backend system.

In an example normal mode of operation, the agent's deployment structure can consist of on average one agent residing on one node, such as an endpoint, together with a local communications node and information aggregation center (local center node 7,8). In an embodiment, the security agents may be built such that at least some of their functionalities are inactive even if present thereby allowing for replication of new agents also into different roles than the original host has.

In an embodiment, the security agent modules are able to activate one or more components of their modular architecture and to replicate themselves. Further, in case any of the security agent modules detects the need for further resources for managing the detected security threat or for analysis of the suspected security threat, the security agent modules may in one embodiment of the invention request resources from other security agent modules or even generate new virtual security agent modules.

In an embodiment, the security agent modules can use sandboxing techniques for determining a remedy for the detected security threat and/or further analyzing the behavior of potentially malicious entities. The sandboxing can be utilized to execute suspicious code or actions in an environment where the outcome can be observed, and the validity of the threat established.

In an embodiment, a suspicious event among the monitored events may be detected by one or more detection mechanisms used. In an embodiment, the detection mechanisms used to detect the suspicious event may comprise using at least one of: a machine learning model, a scanning engine, a heuristic rule, a statistical anomaly detection, fuzzy logic-based models, any predetermined rules.

In the solution of the invention the nodes utilize at least one local threat detection model which comprises a machine learning-based model of a backend threat detection mechanism. The method comprises collecting data related to the node by the security agent module at the node, applying this local threat detection model to the collected data, and making a security related decision at the node, such as an endpoint, based on results of the local threat detection model.

In an embodiment, the method may comprise training machine learning models used in the detection of threats and/or as a response to threats by utilizing one or more following approaches used for training machine learning models: distributed learning via combining local and global information and model parts, reinforcement learning via getting feedback on successful end results, meta-learning via utilizing external information in the learning process; and/or information sharing to bootstrap models and adjust learning behavior.

In one embodiment of the invention the node, such as an endpoint, can utilize both anomaly detection and threat detection models. In one embodiment the machine learning-based misuse and anomaly detection mechanisms can be combined at the node, such as an endpoint. The detection mechanisms at the node, e.g. an endpoint, deal with events that represent activities of key acting entities like computer processes, applications and users. An event can describe a single activity done by a single subject (i.e., its actor) with a single object (for example, file system, network, setting storage, another acting entity like a process and so forth). Hence every event can have a timestamp pointing at the time of its appearance or time of its observation. In one embodiment of the invention, the local threat detection model does not have to comprise a machine learning-based model of a backend threat detection mechanism. In this case all the embodiments in this application can be carried out without the local threat detection model having a machine learning-based model of a backend threat detection mechanism but the local threat detection model can e.g. comprise other machine learning models.

The node-side detection mechanisms can work with events so that every new event gets a score or a set of scores from every mechanism. The scores' semantics can be defined by the purpose of the mechanisms. For the sake of simplicity in these examples high score values can be considered to represent potentially high value of respective events for threat detection, intelligence and hunting purposes.

The misuse detection mechanisms which are used in the solution of the invention can be based on machine learning models focusing on finding events that are likely to contribute to detections of a cyber incident, e.g. existing cyberattacks and their implementations. The models can be trained for example in supervised learning fashion for a binary classification problem at the backend system. The training set can consist of (e.g. two) complementary subsets of existing events that are proven to be relevant for confirmed cyber incidents and represent typical benign behaviors, respectively. The models' training can be regular to address concept drift in data and once the training process is over, new models can be transmitted to agents or sensors at the nodes and used by them locally.

The anomaly detection mechanisms which are used in the solution of the invention can be based on machine learning models focusing on finding uncommon events that are likely to contribute to threat detection, intelligence and hunting purposes. The models can be trained in unsupervised learning fashion at both backend-side and at node, e.g. at an endpoint. If the training process is arranged at the backend-side, new models can be transmitted to nodes' agents or sensors and used by them locally.

The nodes, such as endpoint devices, with installed agent or sensor software can use the models for obtaining scores for the stream of observed local events in a timely manner, e.g. one-by-one. By aligning the events over a timeline in the order of their appearance and combining their scores assigned by the models, a set of time series can be obtained representing a real-time local (i.e. endpoint side) view of misuse and anomaly detection mechanisms about ongoing activities. The obtained view (e.g. events observed on each asset overlaid on a timeline graph as a set of time series) provides a new source of data for further endpoint-side inference with a focus on advanced, real time attack detection, threat hunting and intelligence.

The challenge is to define and maintain a tradeoff between high precision (hence, low sensitivity) of misuse detection mechanisms and high sensitivity (hence, low precision) of anomaly detection mechanisms. Especially early attack detection, threat intelligence and threat hunting require good balance of the threat detection models used in the operation.

The machine learning based misuse detection models can work by producing scores that can be compared with predefined thresholds to highlight malicious events with high level of confidence. This implies that events with scores which are reasonably high but below a given threshold are not taken into consideration in a decision-making process. In this case a substantial part of potentially interesting events are ignored. To address this problem, instead of looking at individual scores of events, patterns of scores over a time window can be examined. There contiguous suspicious events (not getting high enough individual scores from misuse detection) can be detected that can e.g. represent an unknown attack pattern or a "low and slow" attack.

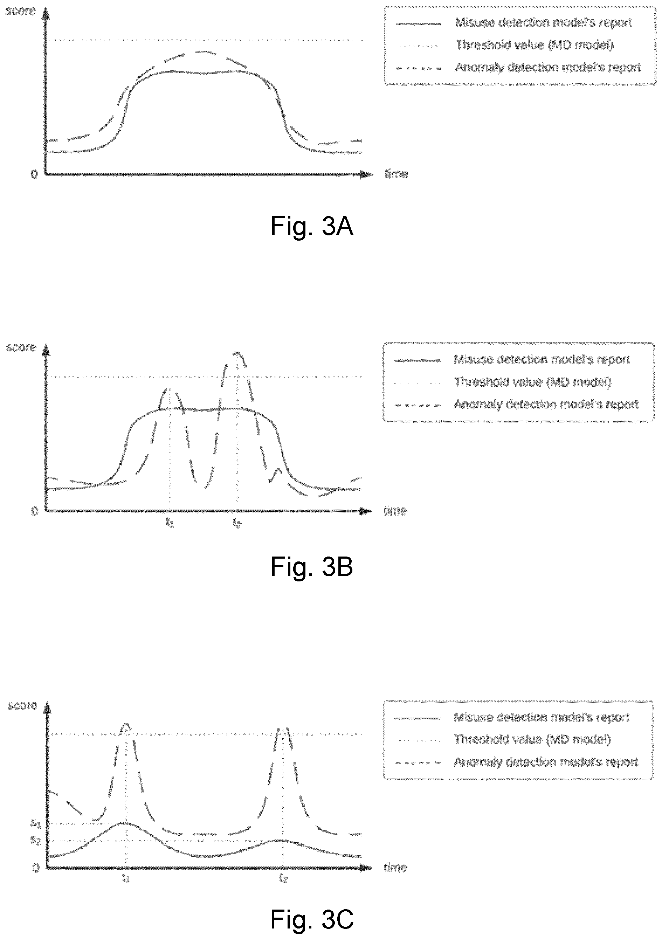

In some example embodiments machine learning based anomaly detection models function in tandem with misuse models and in Figure 3A - 3C some example scenarios relating to these kind of embodiments are presented.

In the scenario of Fig. 3A a potential attack reported by misuse detection mechanisms can be confirmed by anomaly-based attack detection mechanisms. For example, a continuous burst of elevated scores can be reported by misuse models that are below, but not far from a given threshold level. The presence of a well aligned burst of elevated scores reported by anomaly detection models can be used to confirm the presence of a sequence of untypical events that are very likely to be relevant from an attack detection perspective.

In the scenario of Fig. 3B the most interesting time intervals within the time window of a potential attack reported by misuse detection mechanisms can be highlighted and further examined. For example, a continuous burst of elevated scores reported by misuse detection models that are below, but not far from a given threshold (e.g. at a certain distance from the threshold level), could be difficult to investigate without a pointer to interesting events to start from. The pointers can be provided by elevated scores reported by anomaly detection models.

In the scenario of Fig. 3C. mechanisms of prioritization of anomaly-based attack detection mechanisms can be assisted. For example if within a given time window the misuse detection models do not point at suspicious activities but at the same time anomaly detection models report several anomalous spikes of approximately equal importance, the uncertainty with their prioritization can be resolved by assigning the respective priorities according to, for example, average or highest misuse detection scores at the spikes.

In one embodiment of the invention in case a security threat is detected, the security agent module is configured to generate and send a security alert to the internal network and to a local center node (not shown) in the local computer network and to activate security measures for responding to the detected security threat. Further, in case an anomaly that is estimated very likely to be a new threat is identified, the security agent module is configured to verify and contain the threat, generate a new model on the basis of the collected data and received information and share the generated new model to other nodes of the network and/or to the backend system and/or the internal network, such as a swarm intelligence network and/or the local center node.

In one embodiment of the invention if the anomaly is determined to be a false positive e.g. by deeper analysis models or by a human analyst, the logic and/or behavior model is trained not to detect similar and corresponding case again as anomalous.

In an embodiment, further actions may be taken to secure the computer network and/or any related node when a deviation from normal behavior has been detected, for example increasing level of data collection, sending the data to the backend that didn't match the generated local behavior model and/or the received behavior model, heightening a risk level of the user, heightening a risk level of the node and/or alerting an operator, and/or taking immediate action by changing the settings of the nodes in order to ensure an attacker is stopped and any traces of their moves is not destroyed. Changing the settings may include, for example, one or more nodes (which may be computers or other devices) being prevented from being switched off in order to preserve information in RAM, a firewall may be switched on at one or more nodes to cut off the attacker immediately, network connectivity of one or more of the nodes may be slowed down or blocked, suspicious files may be removed or placed into quarantine, logs may be collected from nodes, sets of command may be executed on nodes, users of the one or more nodes may be warned that a threat or anomaly has been detected and that their workstation is under investigation, and/or a system update or software patch may be sent from the EDR backend to the nodes in response to detecting a sign of a deviation from normal behavior. In one embodiment of the invention one or more of these actions may be initiated automatically by the above-described models or algorithms. For example, using the above described methods, data has been collected and shared with the nodes in the computer network and the EDR backend and a threat model or an analysis algorithm has determined that a deviation from normal behavior was detected. As soon as the model/algorithm makes the determination that a deviation from normal behavior was detected, it may generate and issue a command to the related nodes without human intervention to automatically initiate one or more of the above-described actions at the nodes. By doing this, a breach can be stopped and/or the damage minimized automatically at very high speeds and without human intervention.

Next some practical example steps of an operation according to an embodiment will be described.

Deployment and distributing of the components of the user behavior modelling: In one embodiment of the invention, in which all agents may fundamentally have the same code base and/or ability to adapt to their role by activating different components in their modular architecture and replicate themselves, one would merely need to deploy one initial agent in a customer network with sufficient access rights, which would then discover servers and install copies of itself in the suitable locations and establish the internal communications network, e.g. an internal swarm communications network, as well as the backend update, reporting and communication channel. In addition, authentication and other required issues may need to be considered, and in first incarnations agents may be deployed on individual hosts.

Normal operation: The agents continuously monitor their environment and collect data, learning from what they see and build models, e.g. threat detection models. These models may be shared across swarm nodes and used for learning, for example of users' behavior on one computer vs. others in the network. Additionally, abstract information may be sent to the backend in a privacy preserving way. The agents utilize the abovementioned learning models to be prepared also for knowing what is normal.

Encountering a known threat: The agents detecting either a known threat or an anomaly indicating a known threat may instantly alert their swarm mates of the situation, also to prepare for threats that may deactivate them, and call for additional resources if needed (spin up new virtual agents or have them delivered from another host if there is risk of compromise). A known threat can be detected based on the user behavior when comparing the detected behavior to the behavior model. If the agent already has the means for response, that action may be taken.

Encountering a novel threat: The agents, due to constantly learning what is normal and in a very granular manner due to their specificity with the data of their own nodes combined with the broader view of possible global, organization or user group level models, are also well equipped to detect novel threats. Their ability to interact with the users may be used to verify the threat, and if the threat is verified, take actions to contain it as well as build a new threat model that will be circulated, to both swarm mates and also other customers through the central link. Also, a novel threat or anomaly can be detected based on the user behavior when comparing the detected behavior to the behavior model and observing significant deviations. In some embodiments, the risk of the threat may be determined to be so great that autonomous containment actions may also be taken before awaiting a final decision. The degree of autonomous actions can always be adjusted as needed. The connectivity model also allows for the help of human experts to be called upon if needed.

Backend preparation: Constantly during operation, generated behavior models of the users and/or information on events and/or threats can be abstracted and sent to the backend. This enables a backend "laboratory" to continue experimentation on more effective defense tools in a secure environment as well as provides further correlation and analysis of the data sent from the multitude of individual intelligent agents or sensors. Backend can also share threat detection models to the nodes.

As described above, the nature of the model used by the system (e.g. EDR) may be, or may incorporate elements, from one or more of the following: a neural network trained using a training data set, exact or heuristic rules (e.g. hardcoded logic), fuzzy logic based modelling, and statistical inference based modelling. The model may be defined to take into account e.g. particular usage patterns of a node, files, processes, connections, and dependencies between processes.

Although the invention has been described in terms of preferred embodiments as set forth above, it should be understood that these embodiments are illustrative only and that the claims are not limited to those embodiments. Those skilled in the art will be able to make modifications and alternatives in view of the disclosure which are contemplated as falling within the scope of the appended claims. Each feature disclosed or illustrated in the present specification may be incorporated in the invention, whether alone or in any appropriate combination with any other feature disclosed or illustrated herein. Lists and groups of examples provided in the description given above are not exhaustive unless otherwise explicitly stated.

## Claims

1. A method of threat detection in a threat detection network, the threat detection network comprising interconnected nodes (5a - 5h) and a backend system (2), wherein the backend system (2) utilizes a backend threat detection mechanism, and
at least part of the nodes (5a - 5h) comprise security agent modules (6a - 6h) which collect data related to the respective node, and
wherein the nodes (5a - 5h) utilize at least one local threat detection model which comprises a machine learning-based model of a backend threat detection mechanism,
wherein the method comprises:
collecting data related to the node (5a - 5h) by the security agent module (6a - 6h) at the node,
applying the local threat detection model to the collected data, and
making a security related decision at the node (5a - 5h), such as an endpoint, based on results of the local threat detection model.

2. A method according to claim 1, wherein the local threat detection model which comprises a machine learning-based model of the backend threat detection mechanism is an approximation of the backend side rule-based threat detection mechanism.

3. A method according to claim 1 or 2, wherein the local threat detection model comprises at least one misuse detection model which is based on at least one machine learning model for finding events that are likely to contribute to detections of a cyber incident.

4. A method according to claim 3, wherein the misuse detection models are trained at the backend system in supervised learning fashion for a classification problem.

5. A method according to claim 3 and 4, wherein the misuse detection model training set comprises of complementary subsets of existing events that are proven to be relevant for confirmed and existing cyber incidents and/or cyber-attacks and/or represent typical benign behaviours.

6. A method according to any previous claim, wherein the local threat detection model further comprises at least one anomaly detection model which is based on at least one machine learning model for finding uncommon events that are likely to contribute to threat detection, intelligence and/or hunting purposes, and/or
the at least one anomaly detection model is trained in unsupervised, supervised or semi-supervised learning fashion at the backend system or at the node.

7. A method according to any claim 3 - 6, wherein training of the misuse detection and/or anomaly detection model is carried out regularly and/or once the training process is over, a new model is transmitted to nodes (5a - 5h) and used locally by the nodes (5a - 5h).

8. A method according to any previous claim, wherein the agent (6a - 6h) of the node uses the local threat detection model for obtaining scores for a stream of observed local events in a timely manner and/or aligns observed events over a timeline in the order of their appearance and combines their scores assigned by the local threat detection model to the timeline.

9. A method according to any claim 3 - 8, wherein the anomaly detection model and/or misuse detection model are applied to events observed on each node and overlaid on a timeline graph as a set of respective time series, and/or
wherein every new event gets a score or set of scores from the anomaly detection model and/or misuse detection model.

10. A method according to any previous claim, wherein the node utilizes both anomaly detection and misuse detection models at the node (5a - 5h) and uses the models together by analyzing at relations between score patterns between the anomaly detection model and the misuse detection model.

11. A method according to any previous claim, wherein preparation of the machine learning based threat detection model comprises defining backend threat detection mechanism features, defining local threat detection model features, and training the local threat detection model based on training data and/or the backend threat detection mechanism.

12. A node of a threat detection network, the network comprising interconnected nodes and a backend system, wherein
the node (5a - 5h) comprises at least one or more processors and at least one security agent module (6a - 6h) which is configured to collect data related to the respective node, and
the node (5a - 5h) is further configured to utilize a local threat detection model, which comprises a machine learning-based model of a backend threat detection mechanism,
wherein the node (5a - 5h) is configured to:
collect data related to the node by the security agent module at the node (6a - 6h),
apply the local threat detection model to the collected data, and
make a security related decision at the node (5a - 5h), such as an endpoint, based on results of the local threat detection model.

13. A node according to claim 12, wherein the node (5a - 5h) is configured to carry out a method according to any claim 2-11.

14. A threat detection network comprising:
at least one node (5a - 5h) according to claim 12 or claim 13, and
at least one backend system (2), the backend system comprising at least one server which comprises at least one or more processors, and
the backend system (2) is configured to utilize a backend threat detection mechanism and further configured to train and/or provide to nodes (5a - 5h) a local threat detection model, comprising an anomaly detection model and/or a misuse detection model.

15. A computer program comprising instructions which, when executed by a computer, cause the computer to carry out the method according to any of claims 1 - 11.

16. A computer-readable medium comprising the computer program according to claim 15.
